Europäisches Patentamt

European Patent Office

Office européen des brevets

(19)

(11)  **EP 0 645 531 B1**

(12)  **FASCICULE DE BREVET EUROPEEN**

(45)  Date de publication et mention
de la délivrance du brevet:
**11.03.1998  Bulletin 1998/11**

(51)  Int Cl.$^6$: **F02C 7/228**

(21)  Numéro de dépôt: **94402150.0**

(22)  Date de dépôt: **28.09.1994**

(54)  **Dispositif de répartition du carburant entre plusieurs injecteurs**

Vorrichtung zur Verteilung von Brennstoff über mehrere Einspritzdüse

Device for the distribution of fuel over several injectors

(84)  Etats contractants désignés:
**DE FR GB**

(30)  Priorité:  **29.09.1993  FR 9311525**

(43)  Date de publication de la demande:
**29.03.1995  Bulletin 1995/13**

(73)  Titulaire: **SOCIETE NATIONALE D'ETUDE ET DE CONSTRUCTION DE MOTEURS D'AVIATION, "S.N.E.C.M.A."**
**F-75015 Paris (FR)**

(72)  Inventeur: **Joland, Patrick René Denis**
**F-77166 Evry-Gregy Sur Yerres (FR)**

(56)  Documents cités:
**FR-A- 2 696 211                    GB-A- 2 134 184**
**US-A- 2 806 354**

## Description

La présente invention concerne un système de répartition du débit de carburant délivré dans une turbomachine, notamment d'aviation.

Durant leur vol, les avions, qu'ils soient à usage civil ou militaire, sont amenés à effectuer des mouvements divers selon les phases principales du vol : montées, descentes, virages, figures acrobatiques pour les avions d'armes. D'autres mouvements de l'avion existent autour de la trajectoire moyenne et sont dus à l'instabilité de l'avion autour de ses trois axes. Ces mouvements divers sont connus sous les noms de tangage, roulis ou lacet.

Ces mouvements font subir des accélérations à l'avion, au moteur et à leurs équipements. Ces accélérations sont dénommées ci-après facteurs de charge.

Ces facteurs de charge entraînent des écarts dans les pressions d'injection des différents injecteurs de la turbomachine, et par le fait même une hétérogénéité de débit des injecteurs en fonction de leur emplacement sur le moteur, s'il n'est pas prévu de dispositif de compensation des dispersions.

Il est déjà connu d'alimenter chaque injecteur séparément par une pompe à engrenage. Lorsque les pompes à engrenages sont liées entre elles, tous les injecteurs reçoivent le même débit de carburant. Cet état de la technique est illustré notamment par les documents US-3.378.104, US-2.936.028 et US-2.599.680. Cette solution entraîne une augmentation importante de la masse du moteur.

Le but de la présente invention est de proposer un nouveau système de répartition du débit de carburant entre les injecteurs qui assure une répartition homogène entre tous les injecteurs afin d'éviter les excès ponctuels de carburant qui peuvent entraîner des surchauffes locales des aubes de turbine, et qui compense les effets néfastes des facteurs de charge supportés par l'avion et le moteur sur la distribution du débit aux injecteurs.

US-A-2 806 354 décrit un dispositif applicable à l'alimentation en combustible d'un moteur à turbine à gaz dans lequel un collecteur alimente une pluralité d'injecteurs par l'intermédiaire de raccords associé chacun avec deux injecteurs. Chaque raccord comporte un corps de soupape avec une ouverture d'entrée et deux sorties de combustible. Selon une variante, le corps de soupape comporte deux logements disposés sur le même axe pour loger un poids constitué par deux parties situées chacune dans un des logements et coopérant avec les orifices d'entrée respectifs et par une partie intermédiaire de plus faible diamètre traversant les deux orifices d'entrée, les orifices de sortie étant disposés de façon à être fermés par la partie du poids qui ne s'oppose pas au débit par l'orifice d'entrée.

La présente invention concerne donc un système de répartition du type précité du débit de carburant délivré dans la chambre à combustion d'une turbomachine comportant une pluralité d'injecteurs répartis circonférentiellement, ledit système étant interposé entre une conduite d'arrivée de carburant et lesdits injecteurs.

Selon l'invention ce système est caractérisé :

en ce qu'il comporte des répartiteurs, en nombre égal au nombre d'injecteurs, qui alternent circonférentiellement avec les rampes d'alimentation des injecteurs,
en ce que la cavité de répartiteur est d'axe parallèle à la direction générale de la ligne théorique reliant les deux injecteurs alimentés par ledit répartiteur,
et que les deux pistons sont reliés entre eux par des moyens élastiques qui exercent sur chacun desdits pistons une force antagoniste à la force exercée sur ledit piston par la pression régnant dans ladite chambre centrale.

Les avantageuses dispositions suivantes sont en outre adoptées :

- les sorties d'un répartiteur quelconque sont connectées aux deux rampes adjacentes par des conduites qui se croisent ;
- la masse d'un piston est proportionnelle à la hauteur barométrique de carburant contenue dans le circuit entre la sortie de la chambre d'extrémité contenant ledit piston et l'injecteur alimenté par ladite sortie ;
- la conduite d'arrivée alimente un collecteur en forme d'anneau sur lequel sont connectés les répartiteurs.

Grâce à cette disposition, le débit de carburant délivré aux injecteurs est uniformisé dans la chambre de combustion, ce qui permet d'éviter les surchauffes ponctuelles des aubes de turbine.

Le système est insensible aux effets dus aux facteurs de charge, car les forces exercées par les facteurs de charge sur les pistons sont compensées par les forces exercées par lesdits facteurs de charge sur la masse de carburant du circuit du fait du croisement des conduites.

De plus, sur le plan de la fiabilité, le système bouclé permet une compensation d'un piston défaillant par les autres pistons.

Enfin, le système proposé permet d'alimenter la turbomachine en carburant à basse pression, ce qui permet d'obtenir un gain en masse des équipements tels que les pompes et les régulateurs de débit.

D'autres avantages et caractéristiques de l'invention ressortiront à la lecture de la description suivante faite à titre d'exemple non limitatif et en référence aux dessins annexés dans lesquels :

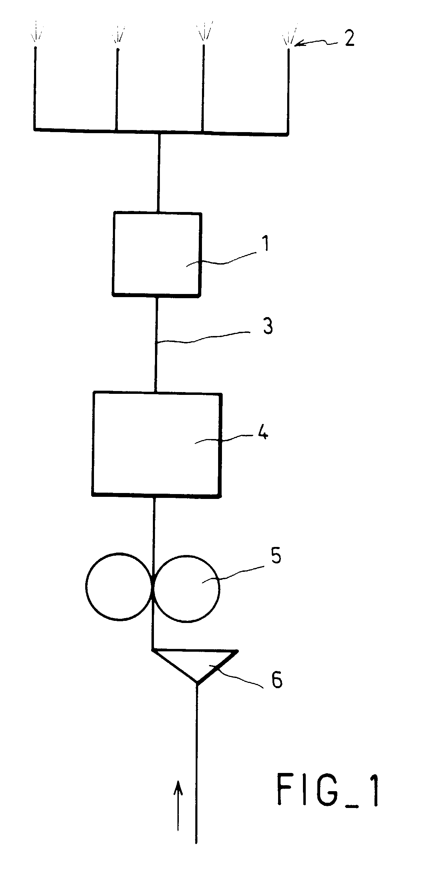

- la figure 1 est une représentation schématique d'un circuit d'alimentation en carburant des injecteurs d'un turboréacteur ;
- la figure 2 est une représentation schématique du système de répartition selon l'invention et,

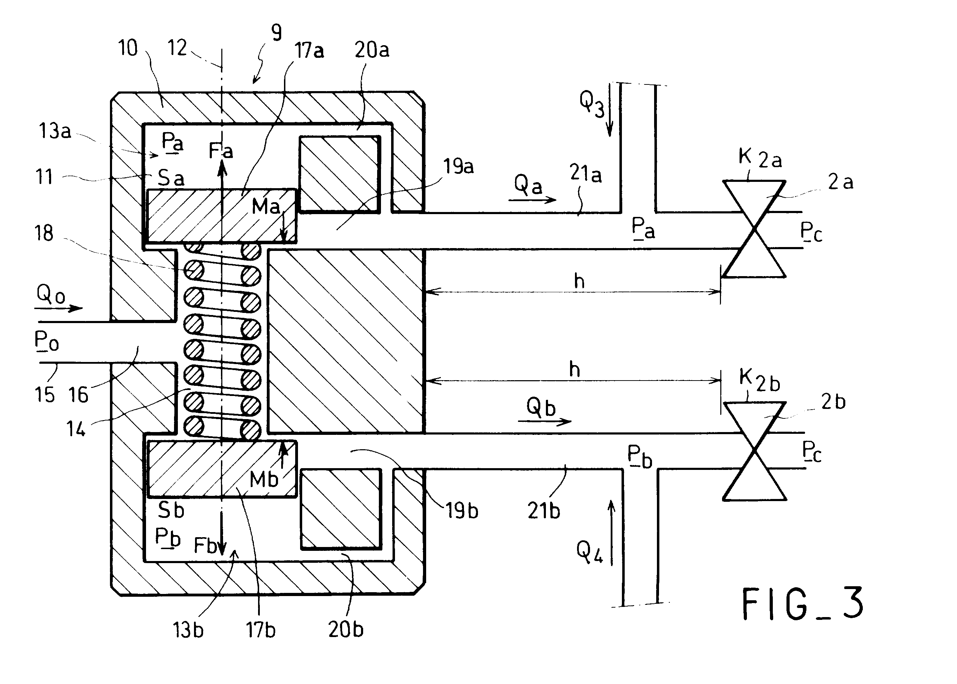

- la figure 3 montre, à plus grande échelle, un répartiteur selon l'invention.

Le système de régulation 1 proposé se situe dans le circuit de distribution du carburant d'une turbomachine à l'amont des injecteurs 2. Il reçoit un débit de carburant délivré par une conduite d'arrivée de carburant 3. Le débit de carburant est dosé par un système 4 de régulation de carburant, disposé en aval d'une pompe à haute pression 5, qui reçoit lui-même du carburant d'une pompe basse pression 6.

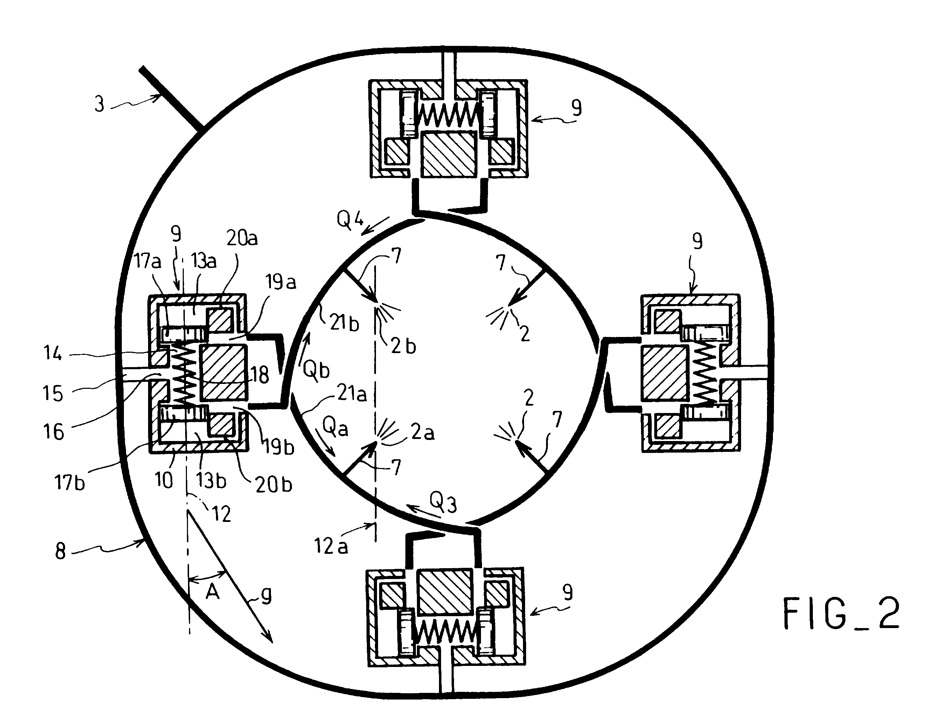

La figure 2 montre la disposition générale du système 1 de l'invention dans une turbomachine à chambre de combustion annulaire. La référence 7 représente la rampe d'alimentation d'un injecteur quelconque 2. Les injecteurs 2 sont au nombre de quatre sur la figure 2 et sont répartis circonférentiellement autour de l'axe de la turbomachine. Le nombre d'injecteurs pourrait éventuellement être différent de quatre. La conduite d'arrivée de carburant 3 alimente un collecteur annulaire 8 qui entoure la chambre de combustion. Quatre répartiteurs 9 de carburant sont disposés en alternance avec les rampes 7 et sont alimentés en permanence par le collecteur 8.

Chaque répartiteur 9, dont le mode de fonctionnement et certaines caractéristiques spécifiques seront expliqués plus loin dans le présent mémoire, comporte essentiellement un carter 10 délimitant une cavité interne 11 d'axe 12, qui définit deux chambres d'extrémité 13a, 13b et une chambre centrale 14. La chambre centrale 14 relie les deux chambres d'extrémité 13a, 13b et a un diamètre inférieur aux diamètres des chambres d'extrémité 13a et 13b. La chambre centrale 14 communique en permanence avec le collecteur 8 par un conduit 15 et un orifice 16 ménagé dans le carter 10. Les diamètres des deux chambres d'extrémité 13a, 13b, sont sensiblement identiques.

Dans les chambres d'extrémité 13a et 13b sont montés de manière coulissante des pistons référencés respectivement 17a et 17b. Les deux pistons 17a et 17b sont reliés entre eux par un ressort de traction 18 qui, en l'absence de pression dans la chambre centrale 14, applique les deux pistons 17a et 17b avec une force F sur les bords des orifices de communication de la chambre centrale 14 avec les chambres d'extrémité 13a et 13b.

Dans la paroi latérale de chaque chambre d'extrémité, il est ménagé un orifice de sortie, référencé 19a dans la chambre 13a et 19b dans la chambre 13b, en regard de la paroi périphérique du piston correspondant. Des conduits de dérivation 20a et 20b relient chaque sortie 19a, 19b à la zone de la chambre d'extrémité correspondante 13a, 13b éloignée de la chambre centrale 14. Les pressions Pa et Pb qui s'exercent sur les faces opposées des deux pistons 17a et 17b sont donc égales aux pressions régnant aux sorties 19a et 19b.

Comme on le voit sur la figure 2, l'axe 12 de chaque cavité 11 est sensiblement parallèle à la direction générale 12a des deux injecteurs adjacents 2a et 2b. De plus, les sorties 19a, 19b du répartiteur 9 sont reliées respectivement aux rampes 7 des injecteurs 2a et 2b par des conduites 21a, 21b, qui se croisent. Ainsi, chaque rampe 7 est alimentée par deux débits de carburant issus de deux répartiteurs adjacents et régulés par les pistons les plus éloignés de ladite rampe 7.

Pour pouvoir compenser les effets du facteur de charge g, il faut que la masse M d'un piston 13a, 13b, soit proportionnelle à la hauteur barométrique h de carburant contenue dans le circuit entre l'injecteur 2, alimenté par ledit piston, et la sortie 19a, 19b, dont la lumière de passage est réglée par le positionnement dudit piston.

La masse M d'un piston est plus précisément égale à la masse Mc de carburant comprise dans le circuit entre l'injecteur 2 et la lumière de sortie réglée sur ledit piston.

On a les équations : $M = Mc = Sph$

dans lesquelles S est la surface de la face du piston soumise à la pression régnant dans la chambre d'extrémité, et p la masse spécifique du carburant.

Grâce à cette caractéristique et du fait que les conduites 21a et 21b se croisent, les effets du facteur de charge g ne sont pas ressentis par le régulateur 9.

En effet, si on désigne par :

F    la force du ressort au repos,
Kr   la rigidité du ressort,
Mca  la masse de carburant dans le circuit 21a,
Mcb  la masse de carburant dans le circuit 21b,
Po   la pression du carburant dosé dans la chambre centrale 14,
Pa   la pression à la sortie 19a,
Pb   la pression à la sortie 19b,
Sa   la surface du piston 17a,
Sb   la surface du piston 17b,

Pc    la pression dans la chambre de combustion,
K2a   le coefficient de débit de l'injecteur 2a,
K2b   le coefficient de débit de l'injecteur 2b,
g     l'accélération perturbante,
A     l'angle de l'axe 12 par rapport à la direction de l'accélération perturbante,
Xa    la course du piston 17a,
Xb    la course du piston 17b,
Ma    la masse du piston 17a,
Mb    la masse du piston 17b,
t     le temps.

Les équations d'équilibre sont les suivantes :

$$Ma \frac{d^2 Xa}{dt^2} = Sa(Po-Pa)-Kr\,(Xa+Xb)-F+ g\cos A\,(Mca-Ma)$$

$$Mb \frac{d^2 Xb}{dt^2} = Sb(Po-Pb)-Kr\,(Xa+Xb)-F+ g\cos A\,(Mcb-Mb)$$

Or le régulateur est étudié pour que :

Ma = Mca
Mb = Mcb

d'où :      g cos A (Mca-Ma) = 0
            g cos A (Mcb-Mb) = 0

ce qui signifie que les effets du facteur de charge g ne sont pas ressentis.

Lorsque les deux pistons 17a et 17b et le ressort 18 sont en équilibre dans le carter 10, les deux équations deviennent:

$$Sa(Po-Pa)-Kr\,(Xa+Xb)-F = 0$$

$$Sb(Po-Pb)-Kr\,(Xa+Xb)-F = 0$$

ce qui entraîne : Po (Sa-Sb) = SaPa - SbPb comme les diamètres des deux chambres d'extrémité 13a, 13b sont sensiblement identiques, Sa = Sb.

On en déduit que les pressions Pa et Pb sont égales, même si les courses Xa et Xb des pistons 17a et 17b sont différentes.

Avec le système proposé par l'invention, les pressions dans les conduites 21a et 21b sont identiques.

Si on pose Xa+Xb = y, y étant l'élongation du ressort 18, on déduit : y = [Sa (Po-Pa)-F] /Kr

L'élongation du ressort 18 n'est fonction que de la différence des pressions (Po-Pa). Ainsi les coefficients de débits des sections des sorties 19a, 19b, découvertes par les pistons 17a, 17b, sont variables et croissent avec la différence de pression Po-Pa, ce qui permet de limiter la perte de charge du répartiteur 9 à fort débit.

Quant à l'avantage de la disposition des répartiteurs 9 sur un anneau bouclé, il peut être exprimé de la façon suivante :

Un injecteur est alimenté par deux débits provenant de deux répartiteurs distincts.

Pour l'injecteur 2a, on a l'équation :

$$Q2a = Qa+Q3 = K2a\sqrt{Pa - Pc}$$

Qa étant le débit délivré par la conduite 21a,
Q3 étant le débit délivré par un autre répartiteur.

Pour l'injecteur 2b, on à l'équation :

$$Q2b = Qb+Q4 = K2b\sqrt{Pb - Pc}$$

Les injecteurs 2a et 2b sont les mêmes, donc les coefficients de débit K2a et K2b sont identiques.
Or en condition d'équilibre Pa = Pb, on en déduit :

$$Qa + Q3 = Qb + Q4$$

Les débits des injecteurs 2a et 2b sont identiques, même si les débits Qa, Qb, Q3 et Q4 sont différents, ce qui peut se produire en cas de défaillance d'un tiroir.

Le système 1 de répartition proposé par l'invention assure ainsi l'uniformité des débits aux différents injecteurs et est insensible aux facteurs de charge.

Il est possible d'alimenter ce système en carburant à basse pression, ce qui permet d'obtenir un gain en masse des équipements.

**Revendications**

1. Système de répartition du débit de carburant délivré dans la chambre de combustion d'une turbomachine comportant une pluralité d'injecteurs (2) répartis circonférentiellement, ledit système étant interposé entre une conduite d'arrivée (3) de carburant et les injecteurs et comportant des répartiteurs (9) raccordés en parallèle à la conduite d'arrivée (3) du carburant et chaque répartiteur comportant :

   - deux sorties de carburant (19a, 19b) raccordées respectivement aux deux rampes voisines (21a, 21b),

   - un corps de valve (10) délimitant une cavité (11) définissant deux chambres d'extrémité (13a, 13b) dans lesquelles débouchent respectivement lesdites sorties de carburant (19a, 19b) et une chambre centrale (14) de plus faible diamètre communiquant en permanence avec la conduite d'arrivée (3) de carburant,

   - deux pistons (17a, 17b) montés coulissants respectivement dans lesdites chambres d'extrémité (13a, 13b) et destinés à modifier les lumières des sorties de carburant (19a, 19b) en fonction de leur positionnement (Xa, Xb) dans lesdites chambres d'extrémité (13a, 13b), lesdites sorties (19a, 19b) étant prévues en regard desdits pistons (17a, 17b) et,

   - des dérivations (20a, 20b) prévues entre chaque sortie de carburant (19a, 19b) et la chambre d'extrémité correspondante afin que la pression (Pa, Pb) du carburant dans ladite sortie (19a, 19b) exerce sur le piston correspondant (17a, 17b) une force antogoniste à la force exercée par la pression (Po) règnant dans la chambre centrale (14),

   caractérisé en ce que lesdits répartiteurs (9) sont en nombre égal au nombre d'injecteurs (2) et alternent circonférentiellement avec les rampes d'alimentation (7) des injecteurs (2), en ce que la cavité (11) de répartiteur est d'axe parallèle à la direction générale de la ligne théorique reliant les deux injecteurs (2a, 2b) alimentés par ledit répartiteur (9) et que les deux pistons (17a, 17b) sont reliés entre eux par des moyens élastiques (18) qui exercent sur chacun desdits pistons (17a, 17b) une forme F antagoniste à la force exercée sur ledit piston par la pression (Po) règnant dans ladite chambre centrale (14).

2. Système selon la revendication 1, caractérisé en ce que les sorties (19a, 19b) d'un répartiteur quelconque (9) sont connectées aux deux rampes adjacentes par des conduites (21a, 21b) qui se croisent.

3. Système selon l'une quelconque des revendications 1 ou 2, caractérisé en ce que la masse (Ma, Mb) d'un piston (17a, 17b) est proportionnelle à la hauteur barométrique (h) de carburant contenu dans le circuit entre la sortie (19a, 19b) de la chambre d'extrémité (13a, 13b) contenant ledit piston (17a, 17b) et l'injecteur (2a, 2b) alimenté par ladite sortie (19a, 19b).

4. Système selon l'une des revendications 1 à 3, caractérisé en ce que la conduite d'arrivée (3) de carburant alimente un collecteur (8) en forme d'anneau sur lequel sont connectés les répartiteurs (9).

5. Système selon l'une des revendications 1 à 4, caractérisé en ce que les deux chambres d'extrémité (13a, 13b) ont des sections identiques (Sa, Sb).

**Patentansprüche**

1. Vorrichtung zur Verteilung der in die Brennkammer einer Turbomaschine mit mehreren am Umfang verteilten Einspritzdüsen (2) zugeführten Brennstoffmenge, wobei die genannte Vorrichtung zwischen einer Brennstoff-Zufuhrleitung (3) und den Einspritzdüsen angeordnet ist und Verteiler (9) aufweist, die parallel mit der Brennstofi-Zufuhrleitung (3) verbunden sind, und wobei jeder Verteiler :

   - zwei Brennstoffausgänge (19a, 19b), die mit den beiden benachbarten Rampen (21a bzw. 21b) verbunden sind,
   - einen Ventilkörper (10), der einen Hohlraum (11) umgrenzt, der zwei Endkammern (13a, 13b), in die die genannten Brennstoffausgänge (19a bzw. 19b) münden, sowie eine mittlere Kammer (14) von geringerem Durchmesser, die ständig mit der Brennstoff-Zufuhrleitung (3) in Verbindung steht, bildet,
   - zwei Kolben (17a, 17b), die verschiebbar in den genannten Endkammern (13a bzw. 13b) angebracht sind und dazu gedacht sind, die Öffnungen der Brennstoffausgänge (19a, 19b) abhängig von ihrer Stellung (Xa, Xb) in den genannten Endkammern (13a, 13b) zu verändern, wobei die genannten Ausgänge (19a, 19b) den genannten Kolben (17a, 17b) gegenüber vorgesehen sind, und
   - Ableitungen (20a, 20b), die zwischen jedem Brennstoffausgang (19a, 19b) und der entsprechenden Endkammer vorgesehen sind, damit der Druck (Pa, Pb) des Brennstoffs in dem genannten Ausgang (19a, 19b) auf den entsprechenden Kolben (17a, 17b) eine Kraft ausübt, die der von dem Druck (Po) ausgeübten, in der mittleren Kammer (14) herrschenden Druck (Po) entgegenwirkt,

   aufweist,
   **dadurch gekennzeichnet, daß** die genannten Verteiler (9) in der gleichen Anzahl vorhanden sind wie die Einspritzdüsen (2) und an der Umfangslinie abwechselnd mit den Zufuhrrampen (7) der Einspritzdüsen (2) angeordnet sind, daß der Verteilerhohlraum (11) mit seiner Achse parallel zu der Hauptrichtung der theoretischen Linie liegt, die die beiden von dem genannten Verteiler (9) versorgten Einspritzdüsen (2a, 2b) verbindet, und daß die beiden Kolben (17a, 17b) miteinander durch federnde Mittel (18) verbunden sind, die aufjeden der genannten Kolben (17a, 17b) eine Kraft F ausüben, die der Kraft entgegenwirkt, die von dem in der genannten mittleren Kammer (14) herrschenden Druck (Po) auf den genannten Kolben ausgeübt wird.

2. Vorrichtung nach Anspruch 1,
   **dadurch gekennzeichnet, daß** die Ausgänge (19a, 19b) eines beliebigen Verteilers (9) mit den beiden angrenzenden Rampen durch sich kreuzende Leitungen (21a, 21b) verbunden sind.

3. Vorrichtung nach einem der Ansprüche 1 oder 2,
   **dadurch gekennzeichnet, daß** die Masse (Ma, Mb) eines Kolbens (17a, 17b) proportional zum barometrischen Stand (h) des Brennstoffs ist, der in dem Kreislauf zwischen dem Ausgang (19a, 19b) der Endkammer (13a, 13b) mit dem genannten Kolben (17a, 17b) und der von dem genannten Ausgang (19a, 19b) versorgten Einspritzdüse (2a, 2b) vorhanden ist.

4. Vorrichtung nach einem der Ansprüche 1 bis 3,
   **dadurch gekennzeichnet, daß** die Brennstoff-Zufuhrleitung (3) eine ringförmige Sammelleitung (8) speist, an der die Verteiler (9) angeschlossen sind.

5. Vorrichtung nach einem der Ansprüche 1 bis 4,
   **dadurch gekennzeichnet, daß** die beiden Endkammern (13a, 13b) identische Querschnitte (Sa, Sb) aufweisen.

**Claims**

1. System for distributing the flow of fuel delivered to the combustion chamber of a turbomachine which has a number of injectors (2) spread out circumferentially, the said system being inserted between a fuel-inlet pipe (3) and the injectors and comprising splitters (9) connected in parallel to the fuel inlet pipe (3), each splitter comprising:

- two fuel outlets (19a, 19b) connected respectively to the two neighbouring lines (21a, 21b),
- a valve body (10) delimiting a cavity (11) defining two end chambers (13a, 13b) into which the said fuel outlets (19a, 19b) respectively open, and a central chamber (14) of a smaller diameter permanently communicating with the fuel inlet pipe (3),
- two pistons (17a, 17b) mounted so that they can slide respectively in the said end chambers (13a, 13b) and intended to alter the fuel outlet ports (19a, 19b) as a function of their position (Xa, Xb) in the said end chambers (13a, 13b), the said outlets (19a, 19b) being provided opposite the said pistons (17a, 17b) and,
- bypasses (20a, 20b) provided between each fuel outlet (19a, 19b) and the corresponding end chamber so that the pressure (Pa, Pb) of the fuel in the said outlet (19a, 19b) exerts on the corresponding piston (17a, 17b) a force which opposes the force exerted by the pressure (Po) prevailing in the central chamber (14),

characterized in that there are the same number of splitters (9) as there are injectors (2) and each of the said splitters alternates circumferentially with the supply lines (7) for the injectors (2), in that the splitter cavity (11) has an axis parallel to the overall direction of the theoretical line which joins the two injectors (2a, 2b) which are supplied by the said splitter (9) and in that the two pistons (17a, 17b) are joined together by elastic means (18) which exert on each of the said pistons (17a, 17b) a force F which opposes the force exerted on the said piston by the pressure (Po) prevailing in the said central chamber (14).

2. System according to Claim 1, characterized in that the outlets (19a, 19b) of any arbitrary splitter (9) are connected to the two adjacent lines by pipes (21a, 21b) which cross.

3. System according to either one of Claims 1 and 2, characterized in that the mass (Ma, Mb) of a piston (17a, 17b) is proportional to the barometric head (h) of fuel contained in the circuit between the outlet (19a, 19b) of the end chamber (13a, 13b) containing the said piston (17a, 17b) and the injector (2a, 2b) supplied by the said outlet (19a, 19b).

4. System according to any one of Claims 1 to 3, characterized in that the fuel inlet pipe (3) supplies a ring-shaped manifold (8) to which the splitters (9) are connected.

5. System according to one of Claims 1 to 4, characterized in that the two end chambers (13a, 13b) have identical cross sections (Sa, Sb).

FIG_1

FIG_2

EP 0 645 531 B1

FIG_3